# EUROPÄISCHE PATENTSCHRIFT

(11) **EP 3 824 531 B1**
(45) Veröffentlichungstag und Bekanntmachung des Hinweises auf die Patenterteilung: **23.09.2026**
(21) Anmeldenummer: 19736579.4
(22) Anmeldetag: 04.06.2019
(51) Int. Cl.: H02K 5/173, H02K 7/14, H02K 11/20, H02K 11/33

(54) **ELEKTROMOTOR, VENTILATOR UND SYSTEM BESTEHEND AUS ELEKTROMOTOR UND AUSWERTEEINHEIT**
ELECTRIC MOTOR, FAN AND SYSTEM COMPRISING AN ELECTRIC MOTOR AND AN EVALUATION UNIT
MOTEUR ÉLECTRIQUE, VENTILATEUR ET SYTÈME COMPORTANT UN MOTEUR ÉLECTRIQUE ET UNE UNITÉ D'ÉVALUATION

(30) Priorität: 17.07.2018 DE 102018211848
(43) Veröffentlichungstag der Anmeldung: 26.05.2021
(73) Patentinhaber: ZIEHL-ABEGG SE, 74653 Künzelsau (DE)
(72) Erfinder: KNORR, Joachim, 97996 Niederstetten (DE)
(74) Vertreter: Ullrich & Naumann PartG mbB
(86) Internationale Anmeldenummer: PCT/DE2019/200058
(87) Internationale Veröffentlichungsnummer: WO 2020/015797

(56) Entgegenhaltungen:
- WO-A1-2011/069545
- CN-U- 202 614 529
- JP-A- 2013 047 690
- JP-A- 2013 134 060

## Beschreibung

Die Erfindung betrifft einen Elektromotor mit mindestens einem Lager, durch das eine Welle oder eine Achse des Elektromotors drehbar gelagert ist, wobei während des Betriebs des Elektromotors Schall entsteht, der mittels eines Schallsensors detektierbar ist. Die Erfindung betrifft ferner einen Ventilator mit einem Elektromotor und ein System bestehend aus einem Elektromotor und einer Auswerteeinheit.

Elektromotoren umfassen üblicherweise einen Stator und einen relativ zu dem Stator drehbar gelagerten Rotor. Die Motorachse bzw. -welle ist häufig über ein oder mehrere Lager gelagert. Diese Lager sind meist als Wälzlager ausgebildet, die aus einem Außenring, einem Innenring und mehreren zwischen Innen- und Außenring angeordneten Wälzkörpern bestehen. Die Wälzkörper ermöglichen eine leichtgängige Drehbewegung des Innenrings relativ zu dem Außenring und gewährleisten einen weitgehend spielfreien Betrieb des Lagers. In vielen Fällen sind die Wälzkörper kugelförmig oder zylindrisch ausgebildet und werden durch einen Käfig in Position gehalten. Dabei sind die Wälzkörper zwischen Außen- und Innenring durch ein Schmiermittel, meist Öl oder Lagerfett, geschmiert.

Wie viele mechanisch bewegte Vorrichtungen sind auch Lager einem Verschleiß unterworfen. Dieser kann durch abgeplatzte Partikel, unzureichende Schmierung, defekte Lagerkäfige, eindringende Fremdpartikel, Riefenbildung, ungleichmäßige Belastung (beispielsweise durch Verspannungen), starke Schwingungsbeanspruchung oder dergleichen ausgelöst oder begünstigt werden und bis zu einem Lagerschaden führen. Je nach seinem Fortschritt äußert sich Verschleiß in der Regel durch mechanische Schwingungen, die sich über die Lagerschalen an andere Bestandteile des Elektromotors übertragen. Diese Schwingungen sind, insbesondere bei starken Beschädigungen, mit Schwingungssensoren messbar. Dabei werden meist Schwingungssensoren verwendet, die eine Beschleunigung oder eine Geschwindigkeit der Schwingungen messen.

Ein derartiges System ist beispielsweise in der EP 2 972 431 B1 offenbart. Hierzu ist ein Schwingungssensor mittels eines metallischen Körperschallelements an dem Statorflansch auf dessen vom Rotor abgewandten Seite befestigt. Der Schwingungssensor misst Vibrationen des Elektromotors, wodurch Probleme mit dem Lager des Elektromotors erkannt werden können.

Bei einem geringen Verschleiß oder bei Vorliegen von Verspannungen der Lager ist es dennoch hilfreich, wenn der Zustand der Lager bestimmbar wäre, da auf diese Weise frühzeitig auf kritische Betriebsbedingungen reagiert werden kann. Allerdings sind die dann entstehenden mechanischen Schwingungen derart gering, dass sie lediglich mit sehr hochwertigen Schwingungssensoren messbar sind, die aufgrund der hohen Kosten für eine Großserienproduktion ungeeignet sind. Günstige Schwingungssensoren sind jedoch üblicherweise in ihrer Bandbreite beschränkt und können nur mit einer begrenzten Frequenz in guter Qualität und Auflösung messen. Typische günstige MEMS (Mikro-Elektro-Mechanisches System)-Beschleunigungssensoren können beispielsweise Signalfrequenzen von maximal 5 kHz bei einer Auflösung von 8 Bit messen. Sofern eine höhere Auflösung, beispielsweise 10 Bit oder 12 Bit, gefordert ist, sinken die Abtastraten schnell auf 2 kHz oder darunter. Diese Frequenzen sind jedoch nicht dazu geeignet, aufkommende Lagerschäden zu detektieren.

Ein andere, auf Körperschallsensoren basierende Vorrichtung ist in der JP 2013 134060 A offenbart, wobei hier ähnliche Probleme zu erwarten sein dürften.

Daher sind Vorrichtungen bekannt, bei denen zusätzlich zu einem Schwingungssensor ein Mikrofon eingesetzt wird. Eine derartige Vorrichtung zur Zustandsüberwachung eines Wälzlagers ist beispielsweise in der DE 10 2012 220 222 A1 offenbart. Zusätzlich zu einem Schwingungssensor ist ein Schallemissionssensor eingesetzt, der Schallemissionen des Lagers im Ultraschallbereich misst. Das Signal des Schwingungssensors wird dazu genutzt, den Zustand des Lagers basierend auf Grenzwerten in eine von vier Kategorien einzuteilen. Die gemessenen Schallemissionen werden zur Anpassung der Grenzwerte verwendet. Allerdings sind die eingesetzten Ultraschall-Mikrofone teuer. Ferner wird bei diesem System weiterhin ein hochwertiger Schwingungssensor benötigt.

Aus der DE 10 2008 053 875 A1 ist ein Lagerzustandsdiagnosegerät bekannt, bei dem mittels Geräuschsensoren Lagergeräusche erfasst und mit zuvor aufgenommenen Daten verglichen werden. Zum Verbessern des Signal-zu-Rausch-Verhältnisses sind innerhalb des Elektromotors Geräuschleitkanäle ausgebildet, die Schall von dem Lager zu dem Geräuschsensor leiten. Eine Schaltvorrichtung kann jeweils einen von mehreren Geräuschleitkanälen mit einem Geräuschsensor verbinden. Damit können durch Lager erzeugte Geräusche zwar effektiv gemessen werden, allerdings ist die Herstellung der notwendigen Geräuschleitkanäle aufwendig und damit teuer.

Ein ähnliches System mit Schallleitrohren ist in der JP 2013 047690 A offenbart.

CN 202 614 529 U offenbart einen Prüfstand für Lager. Ein zu prüfendes Lager wird auf eine Welle aufgesteckt, die mittels eines an der Welle fixierten Rotors und einem Stator in Rotation versetzt werden kann. Fixierplatten pressen den äußeren Ring des Lagers nach unten. Austauschbare Gewichte können eine Belastung des Lagers simulieren. Ein Mikrofon ist bei dem Lager angeordnet und nimmt dessen Geräusche auf. Auf diese Weise lässt sich prüfen, welche Geräusche ein belastetes Lager im Betrieb von sich gibt.

WO 2011/069545 A1 bezieht sich auf ein Zustandsüberwachungssystem für einen Elektromotor. Das Überwachungssystem ist in einem Lagerschild integriert und weist eine Sensoreinheit auf, die unter anderem "Mittel zum Messen akustischer Schwingungen" umfassen kann. Das Überwachungssystem kann auf einer Platine implementiert sein, die ein Loch zum Aufstecken der Platine auf die Motorwelle aufweist.

Der vorliegenden Erfindung liegt die Aufgabe zugrunde, einen Elektromotor, einen Ventilator und ein System der eingangs genannten Art derart auszugestalten und weiterzubilden, dass während des Betriebs des Elektromotors entstehender Schall mit einfachen und kostengünstigen Mitteln bewertet werden kann.

Erfindungsgemäß wird die voranstehende Aufgabe durch die Merkmale des unabhängigen Anspruchs 1 gelöst. Bevorzugte Ausgestaltungen und Weiterbildungen sind in den abhängigen Ansprüchen angegeben. Erfindungsgemäß ist der Elektromotor durch einen Schallraum gekennzeichnet, der in dem Elektromotor ausgebildet und von mehreren Begrenzungsflächen begrenzt ist, wobei mindestens eine der Begrenzungsflächen eine Schallfläche umfasst, wobei die Schallfläche durch eine Oberfläche des Lagers oder durch eine Oberfläche eines Schall zu der Oberfläche leitenden Körpers gebildet ist, wobei der Schallsensor in dem Schallraum angeordnet ist und wobei der Schallsensor dazu ausgebildet ist, über Luft von der Schallfläche an den Schallsensor übertragenen Schall zu detektieren.

Hinsichtlich eines Ventilators ist die voranstehende Aufgabe durch die Merkmale des Anspruchs 14 gelöst, wonach der erfindungsgemäße Ventilator einen erfindungsgemäßen Elektromotor und ein Laufrad umfasst, wobei das Laufrad mit einem Rotor des Elektromotors verbunden ist.

Hinsichtlich eines Systems ist die voranstehende Aufgabe durch die Merkmale des Anspruchs 15 gelöst. Danach besteht das erfindungsgemäße System aus einem erfindungsgemäßen Elektromotor und einer Auswerteeinheit, wobei die Auswerteeinheit eine Kommunikationsschnittstelle aufweist, über die Messwerte eines Schallsensors und/oder aufbereitete Messwerte von einer Sensorelektronik zu der Auswerteeinheit empfangbar sind, und wobei die Auswerteeinheit zur Auswertung der Messwerte und/oder der aufbereiteten Messwerte ausgebildet ist.

In erfindungsgemäßer Weise ist zunächst erkannt worden, dass sich Lagerschäden oder aufkommende Lagerschäden häufig mit gut hörbaren Geräuschen im Bereich von 3 kHz bis 5 kHz äußern. Selbst Verspannungen der Lager rufen Geräusche in einem derartigen Frequenzbereich hervor. Auch andere Schallquellen, wie beispielsweise strömende Luft, Unwuchten, mit dem Rotor des Elektromotors verbundene Lasten oder Lüftungsgitter, können während des Betriebs des Elektromotors Schall in diesem Frequenzbereich hervorrufen. Diese Frequenzen sind zwar mit günstigen Schwingungssensoren nicht mit ausreichender Auflösung und Qualität erfassbar. Allerdings können günstige Schallsensoren diese Lücke füllen und dadurch die Nutzung eines Schwingungssensors ergänzen oder gar ersetzen.

Da die Amplituden der Schallwellen häufig relativ klein sind, ist zur Verbesserung der Detektierbarkeit erfindungsgemäß in dem Elektromotor bei dem Schallsensor ein Schallraum ausgebildet, der von mehreren Begrenzungsflächen begrenzt ist. Dieser Schallraum dient als eine Art Resonanzvolumen, das die Ausbreitung von Schallwellen über die Luft begünstigt und eine Messung mit einem Schallsensor verbessert. Mindestens eine der Begrenzungsflächen des Schallraums ist dabei durch eine Schallfläche gebildet. Eine derartige Schallfläche kann durch verschiedenste Flächen gebildet sein, die Schall von der Schallquelle, beispielsweise einem Lager des Elektromotors, zu dem Schallraum übertragen. In einer Ausgestaltung ist eine derartige Schallfläche durch eine Oberfläche des Lagers gebildet. Diese Oberfläche kann beispielsweise eine Stirnseite des Lagers oder ein Teil des Innen- und/ oder Außenrings sein. Erfindungsgemäß ist eine derartige Schallfläche durch eine Oberfläche eines schallleitenden Körpers gebildet, der Schall zu dessen Oberfläche leitet. Im Falle eines Lagers als Schallquelle würde der schallleitende Körper Schall von dem Lager zu dessen Oberfläche leiten. Prinzipiell können beide Ausgestaltungen auch kombiniert sein.

Wenn eine derartige Schallfläche erfindungsgemäß den Schallraum an zumindest einer Seite begrenzt, kann der Körperschall von der Schallfläche an die Luft in dem Schallraum abgegeben werden. Ein in dem Schallraum angeordneter Schallsensor kann damit den von dem Lager oder einer anderen Schallquelle ausgehenden Schall messen. Durch das Vorsehen des Schallraumes kann trotz der relativ kleinen Amplituden ein günstiger Schallsensor eingesetzt werden, sodass auf einfache Art und Weise eine Vorrichtung zum Erkennen von Lagerschäden oder aufkommende Lagerschäden entstehen kann.

Es sei darauf hingewiesen, dass die hier beschriebene Lehre nicht auf die Verwendung eines einzelnen Schallsensors beschränkt ist. Vielmehr können mehrere Schallsensoren verwendet werden, die an unterschiedlichen Stellen des Elektromotors Schall messen. Dabei ist es denkbar, dass die mehreren Schallsensoren an unterschiedlichen Stellen des Schallraums angeordnet sind. So kann beispielsweise bei einem Schallraum mit mehreren Schallflächen bei jeder oder einigen der Schallflächen ein separater Schallsensor angeordnet sein.

Unter einem "Betrieb des Elektromotors", während dessen Schall entsteht und zumindest in Teile des Elektromotors eingekoppelt wird, wird eine Drehbewegung des Rotors des Elektromotors relativ zu dem Stator des Elektromotors verstanden. Bezüglich des Lagers bedeutet dieser Betrieb eine Drehbewegung des Innenrings relativ zu dem Außenring. Dabei ist es weitgehend unerheblich, wie schnell die Drehbewegung erfolgt, da selbst bei sehr kleinen Bewegungen bereits Laufgeräusche entstehen werden. Vorzugsweise wird unter dem Betrieb des Elektromotors aber ein bestimmungsgemäßer Betrieb verstanden, d.h. die Laufgeräusche des Lagers bzw. andere Geräusche des Betriebs werden während einer normalen Nutzung des Elektromotors erfasst und ausgewertet. Dies schließt selbstverständlich nicht aus, dass während eines Inbetriebnahme- oder Kalibrierungslaufs Laufgeräusche des Lagers erfasst und ausgewertet werden, um zu erkennen, ob eine Verspannung der Lager vorliegt und ob die Lager ordnungsgemäß arbeiten.

Prinzipiell kann der Schallraum verschiedenste Formgebungen aufweisen. Lediglich beispielhaft aber nicht darauf beschränkend sei auf zylindrische, quaderförmige oder prismatische Formen (beispielsweise mit sechseckiger oder achteckiger Grundfläche) verwiesen. Die Begrenzungsflächen des Schallraums können dabei glatt oder strukturiert sein. Wichtig ist lediglich, dass die Schallfläche den Schall gut an den Schallraum abgeben kann und dass sich der Schall gut in dem Schallraum ausbreiten kann. Eine derartige Voraussetzung lässt sich jedoch relativ einfach schaffen.

Bei der Schallfläche ist es besonders günstig, wenn diese aus einem Metall gefertigt ist. Insbesondere wenn die Schallfläche durch eine Oberfläche eines schallleitenden Körpers gebildet ist, begünstigt diese die Übertragung des Schalls und die Abgabe des Schalls an den Schallraum.

Auch der Elektromotor kann verschiedenste Bauarten aufweisen. Elektromotoren in Innenläuferbauweise lassen sich ebenso mit einem Schallraum ausstatten wie Elektromotoren in Außenläuferbauweise. Entsprechend können mehrere Motortypen verwendet werden. Lediglich beispielhaft sei auf den Einsatz bei einem Synchronmotor, einem Asynchronmotor oder einem EC-Motor (Electronically Commutated Motor) verwiesen.

Zur Bewertung des Zustands des Lagers/der Lager kann eine Verschleißüberwachungseinheit vorgesehen sein. Eine derartige Verschleißüberwachungseinheit kann Bestandteil einer Sensorelektronik oder einer Motorelektronik sein oder kann als separate Funktionseinheit ausgebildet sein. Die Einheit kann in dem Elektromotor integriert oder in einer externen Einheit implementiert sein. Aufgabe einer derartigen Verschleißüberwachungseinheit ist es, aus den Messsignalen des Schallsensors Kennwerte zu extrahieren und daraus eine Aussage über den Zustand des Lagers/der Lager treffen zu können. In einer besonders einfachen Ausgestaltung kann das Messsignal in einem Frequenzband, beispielsweise 3 kHz bis 5 kHz, betrachtet und die Amplituden des Messsignals ausgewertet werden. Dies kann beispielsweise ein Detektieren der maximalen Amplitude oder einer mittleren Amplitude in diesem Frequenzband beinhalten. Basierend auf der Auswertung der Amplitude kann dann auf den Zustand des Lagers geschlossen werden. In einer anderen Ausgestaltung kann eine spektrale Analyse des Messsignals erfolgen, beispielsweise mittels einer FFT (Fast Fourier Transformation). Aus dem Spektrum oder allgemein dem Ergebnis der Analyse kann dann das Ausmaß und teilweise sogar die Art des Verschleißes ermittelt werden.

Wie bereits ausgeführt kann der erfindungsgemäße Elektromotor prinzipiell zur Erfassung und Bewertung verschiedenster Geräusche ausgebildet sein, die während dessen Betrieb entstehen. Lediglich beispielhaft sei auf Vibrationen durch Unwuchten, auf Vibrationen eines Lüftungsgitters, auf Geräusche durch strömende Luft, beispielsweise bei Verwendung des Elektromotors in einem Ventilator, oder durch Vibrationen einer mit dem Rotor des Elektromotors verbundenen Last verwiesen. Solange der entstehende Schall an eine der Schallflächen des Schallraums übertragen wird, lassen sich diese Geräusche detektieren und geeignet auswerten. Ganz besonders bevorzugter Weise wird der erfindungsgemäße Elektromotor jedoch dazu genutzt, um Geräusche des mindestens einen Lagers des Elektromotors zu detektieren. In diesem Fall umfasst der während des Betriebs des Elektromotors entstehende Schall solchen Schall, der durch das mindestens eine Lager des Elektromotors ausgesendet wird. Hierbei kann es von Vorteil sein, wenn andere Geräusche, die nicht aus dem Betrieb des mindestens einen Lagers resultieren, durch geeignete Konstruktionsmaßnahmen gedämpft sind.

Erfindungsgemäß ist der Schallraum zwischen einer Leiterplatte und einer Statorbuchse des Elektromotors gebildet. Als Statorbuchse ist der Bereich des Elektromotors bezeichnet, der das Statorwicklungspaket des Elektromotors trägt. Insbesondere bei Außenläufermotoren ist es üblich, an der dem Statorwicklungspaket abgewandten Seite der Statorbuchse ein Elektronikgehäuse vorzusehen, in dem eine Leiterplatte angeordnet sein kann. Auf einer derartigen Leiterplatte können verschiedene Schaltungen ausgebildet sein, die beispielsweise eine Sensorelektronik, Leistungsschalter oder Bauteile zum Steuern von Funktionen des Elektromotors umfassen. In einer bevorzugten Ausgestaltung trägt die Leiterplatte jedoch eine Motorelektronik, die zum Ansteuern von Wicklungen des Stators und/oder des Rotors des Elektromotors ausgebildet ist.

Bei dieser Weiterbildung des Schallraums zwischen Leiterplatte und Statorbuchse ist die Schallfläche durch eine Oberfläche der Statorbuchse gebildet. Diese Oberfläche wird üblicherweise die Oberfläche der Statorbuchse sein, die der Leiterplatte zugewandt ist. In Richtungen parallel zu der Leiterplatte kann der Schallraum durch seitliche Wandungen eines Elektronikgehäuses begrenzt sein.

In einer bevorzugten Weiterbildung ist jedoch ein Begrenzungselement zwischen Leiterplatte und Statorbuchse angeordnet, das den Schallraum in Richtungen parallel zur Leiterplatte begrenzt. Ein derartiges Begrenzungselement kann aus den verschiedensten Materialien gebildet sein. Vorzugsweise ist das Begrenzungselement jedoch ein Kunststoffbauteil, das zwischen Leiterplatte und Statorbuchse angeordnet ist. Das Begrenzungselement kann dabei verschiedene Grundflächen aufweisen. Lediglich beispielhaft, jedoch nicht auf diese beschränkt, sei auf eine quadratische, runde, elliptische, rechteckige, sechseckige oder achteckige Grundfläche verwiesen.

Prinzipiell gibt es verschiedene Möglichkeiten, wie in dieser Weiterbildung des Schallraums der Schallsensor angeordnet sein kann. Vorzugsweise ist der Schallsensor jedoch auf der Leiterplatte angeordnet, die den Schallraum in eine Richtung begrenzt. Dabei ist der Schallsensor vorzugsweise auf der Seite der Leiterplatte angeordnet, die der Statorbuchse zugewandt ist. Auf diese Weise lässt sich eine einfache Installation und eine gleichzeitig gute Messbarkeit der Schallwellen erreichen.

In einer nicht beanspruchten Ausgestaltung kann der Schallraum in einem Lagerrohr gebildet sein, das zumindest Teile der Welle oder Achse des Elektromotors umschließt und an dem mindestens ein Lageraufnahmebereich für das/die Lager ausgebildet ist/ sind. In einer derartigen Ausgestaltung würde der Schallraum durch die Wandungen des Lagerrohrs, das/die Lager und die Welle/Achse begrenzt. Bei einem Außenläufermotor sind meist auf beiden Seiten des Lagerrohrs Lageraufnahmebereiche ausgebildet, in denen jeweils ein Lager aufgenommen ist. Zwischen Welle und Lagerrohr ist ein Zwischenraum ausgebildet, der vielfach zwischen 4 mm und 8 mm breit ist. Damit besteht ein Raum, der als Schallraum im Sinne der vorliegenden Erfindung verwendet werden kann. Als Schallflächen können dabei nahezu alle Begrenzungsflächen des Schallraums dienen. Einerseits können die in Richtung des Schallraums gerichteten Oberflächen der Lager Schallwellen an den Schallraum abgeben und damit Schallflächen bilden. Andererseits stehen die Welle/Achse und die Wandungen des Lagerrohrs in direktem Kontakt mit den Lagern. Da sowohl Welle/Achse als auch die Wandungen des Lagerrohrs üblicherweise aus metallischen Werkstoffen gefertigt sind, können diese die vom dem Lager erzeugten Schallwellen besonders gut in das Innere des Schallraums übertragen.

In dieser nicht beanspruchten Ausgestaltung eier kann der Schallsensor Teil einer Sensoranordnung sein, die zum Einbringen in das Lagerrohr ausgebildet ist. Eine derartige Sensoranordnung ist in der DE 10 2018 211 833 A1 näher beschrieben, auf deren Inhalt hiermit ausdrücklich Bezug genommen wird.

Zur Verbesserung der Ergebnisse beim Detektieren des durch die Lager erzeugten Schalls ist der Schallsensor vorzugsweise nahe bei der Schallfläche angeordnet. "Nahe bei" bedeutet dabei, dass der Abstand zwischen der Schallfläche und dem Schallsensor weniger als 5 cm beträgt. Besonders bevorzugter Weise ist der Schallsensor dabei weniger als 1 cm von der Schallfläche entfernt. Dies kann auch bedeuten, dass der Schallsensor in geringst möglichen Abstand zu der Schallfläche angeordnet ist. Bei mehreren Schallflächen kann der Schallsensor auch lediglich nahe bei einer der mehreren Schallflächen angeordnet sein, während die weiteren Schaltflächen einen größeren Abstand aufweisen. Der Abstand bezeichnet dabei die Distanz, um die die Schallfläche von dem aktiven Bereich des Schallsensors beabstandet ist.

Prinzipiell kann der Schallsensor auf verschiedenste Art und Weise ausgebildet sein. Wichtig dürfte sein, dass der Schallsensor ausreichend robust ist, um in dem jeweiligen Anwendungsszenarium eingesetzt werden zu können. Ferner wird der Schallsensor, insbesondere beim nicht beanspruchten Einsatz im Inneren des Lagerrohrs, ausreichend temperaturbeständig und robust gegenüber elektromagnetischen Wellen sein müssen. Ferner sollte der Schallsensor zum Messen von Schallwellen im Hörbereich, also zwischen etwa 20 Hz bis 20 kHz, ausgebildet sein. Vorzugsweise kommt dabei ein Schallsensor zum Einsatz, der Frequenzen zwischen 1 kHz und 10 kHz detektieren kann. Besonders bevorzugter Weise ist der Schallsensor im Bereich zwischen 3 kHz und 5 kHz besonders empfindlich. Diese Anforderungen können aber viele der aus der Praxis bekannten Schallsensoren erfüllen.

In einer bevorzugten Ausgestaltung ist der Schallsensor durch ein MEMS (Mikro-Elektro-Mechanisches System) gebildet. Besonders bevorzugter Weise ist der Schallsensor dabei ein MEMS-Mikrofon. Derartige MEMS-Mikrofone sind mit sehr kompakten Abmessungen am Markt verfügbar. So vertreibt beispielsweise Infineon MEMS-Mikrofone, die lediglich 3 x 4 x 1,2 mm groß sind. Auch von anderen Herstellern sind MEMS-Mikrofone mit ähnlichen Abmessungen verfügbar. Die Messbereiche beginnen im zweistelligen Hertzbereich und erstrecken sich bis 20 kHz. Derartige MEMS-Mikrofone sind für den erfindungsgemäßen Elektromotor ideal geeignet.

In einer Weiterbildung ist eine Sensorelektronik vorgesehen, die zum Ansteuern des Schallsensors ausgebildet ist. Wie konkret die Sensorelektronik ausgebildet ist, hängt dabei von dem jeweils verwendeten Schallsensor ab. Üblicherweise dürfte die Sensorelektronik verschiedenste elektrische und elektronische Bauteile aufweisen. Diskrete Bauteile können ebenso verwendet werden wie integrierte Bauteile. Lediglich beispielhaft, jedoch nicht auf diese beschränkt, sei auf die Verwendung von integrierten Schaltkreisen, Widerständen, Spulen, Kondensatoren, Steckverbindung und/oder Transistoren verwiesen. Dabei werden vorzugsweise Bauteile eingesetzt werden, die als SMD-Bauteile ausgestaltet sind.

Zum Erhalten eines möglichst umfassenden Bildes des Zustands der Lager kann die Sensorelektronik dazu ausgebildet sein, wiederholt Messwerte zu erzeugen und den Zustand des Lagers zu bewerten. Dabei kann das wiederholte Erzeugen von Messwerten und wiederholte Bewerten des Zustands durch bestimmte Ereignisse getriggert sein. Denkbar ist beispielsweise, dass eine Bewertung bei einem Hochlauftest bei einer Endprüfung des Elektromotors getriggert wird. Denkbar ist auch, dass eine Bewertung im Zusammenhang mit einem Einschalten des Elektromotors, beispielsweise 10 Sekunden nach dem Einschalten, durchgeführt wird. Ein derartiges Ereignis kann aber auch in Wartungsarbeiten bestehen, bei denen sich eine Wartungsperson über eine Schnittstelle mit der Sensorelektronik verbindet und ein Erfassen von Messwerten auslöst.

Vorzugsweise erfolgt das wiederholte Erzeugen von Messwerten und wiederholte Bewerten des Zustands periodisch. Da sich der Zustand eines Lagers üblicherweise relativ langsam ändern wird, wird es vielfach nicht notwendig sein, den Zustand der Lager im Sekunden- oder Minutentakt zu bewerten. Vielmehr wird es meist ausreichen, wenn die Periodenlänge im Stundenbereich oder gar im Tagesbereich liegt.

In einer Ausgestaltung der Sensorelektronik weist diese einen Prozessor auf, der verschiedentliche Aufgaben übernehmen kann. Dabei ist der Prozessor vorzugsweise als Mikrocontroller ausgebildet. Der Prozessor kann Messwerte des Schallsensors aufbereiten und/oder auswerten. Eine derartige Aufbereitung/Auswertung kann auf verschiedenste Weise erfolgen. So wäre denkbar, dass eine Analog/Digital-Wandlung vorgenommen wird, so dass ein Messsignal des Schallsensors danach als eine Folge von digitalisierten Messwerten vorliegt. Eine Aufbereitung kann eine Linearisierung des Messsignals des Schallsensors umfassen. Denkbar ist auch, dass eine Filterung hinsichtlich besonders interessanter Frequenzen vorgenommen wird. Eine Aufbereitung kann auch eine spektrale Analyse des Messsignals bedeuten, indem beispielsweise eine FourierTransformation des Messsignals durchgeführt wird. Dabei kann eine Aufbereitung von Messwerten ein erster Schritt bei der Auswertung der Messwerte sein. Wenn beispielsweise das Messsignal mittels einer Amplitudenbewertung ausgewertet wird, so dürfte in einem ersten Schritt eine Frequenzfilterung des Messsignals und erst danach eine Amplitudenbewertung durchgeführt werden. Bei einer Frequenzbewertung dürfte sich zuvor eine spektrale Zerlegung anbieten.

Die Sensorelektronik kann einen Speicher aufweisen, in dem Messwerte des Schallsensors und/oder aufbereitete Messwerte und/oder Ergebnisse einer Auswertung von Messwerten gespeichert werden können. Dabei kann der Speicher auf verschiedenste Weise ausgebildet sein. Zum Vermeiden eines Datenverlusts bei Ausfall einer Energieversorgung ist der Speicher vorzugsweise ein nichtflüchtiger Speicher. Ein derartiger nichtflüchtiger Speicher kann beispielsweise ein Flash-Speicher, ein EEPROM (Electronically Erasable Programmable Read-Only Memory), ein NVRAM (Non-volatile Random Access Memory) oder ein anderer Halbleiterspeicher sein.

Die Größe des Speichers wird von verschiedenen Faktoren abhängen. So wird bei dem Bedarf des Speicherns sehr vieler Messwerte ein größerer Speicher notwendig sein als beim Speichern lediglich weniger Messwerte. Wenn die gespeicherten Messwerte Rohdaten umfassen, die später einer Frequenzanalyse unterzogen werden, wird dies einen größeren Speicherplatz erfordern. Des Weiteren wird sich die Häufigkeit des Erfassens von Messwerten auswirken, denn bei stündlichem Erfassen von Messwerten werden deutlich mehr Messwerte entstehen als bei einem täglichen oder wöchentlichen Erfassen.

In einer Weiterbildung kann die Sensorelektronik eine Echtzeituhr (RTC - Real Time Clock) aufweisen. Diese Echtzeituhr kann für verschiedenste zeitgesteuerte und/ oder zeitbasierte Vorgänge innerhalb der Sensorelektronik genutzt werden. Wenn beispielsweise durch die Sensorelektronik stündlich oder täglich das Messen und Bewerten der Geräusche der Lager ausgelöst werden soll, so kann die Echtzeituhr diesen Vorgang triggern. In einer besonders bevorzugten Ausgestaltung wird die Echtzeituhr zur Zeitstempelung eines gewonnenen Messwerts oder einer Gruppe von Messwerten genutzt. Beim Abspeichern eines Messwerts würde dann ein Zeitstempel mitgespeichert, der für den Zeitpunkt des Erzeugens des gespeicherten Messwerts repräsentativ ist.

Damit gewonnene Messwerte, aufbereitete Messwerte und/oder Ergebnisse von Auswertungen von Messwerten auch außerhalb der Sensoranordnung genutzt werden können, weist die Sensorelektronik vorzugsweise eine Kommunikationsschnittstelle auf. Die Kommunikationsschnittstelle kann zum Koppeln der Sensorelektronik mit einem Auslesegerät verwendet werden. Auf diese Weise lassen sich auch im laufenden Betrieb des Motors Informationen beziehen. Denkbar ist auch eine Kopplung zu einem loT (Internet of Things)-Gateway. Diese Kommunikationsschnittstelle kann drahtgebunden oder drahtlos sein. Auch optische Kommunikationsmittel, die eine Luftstrecke oder einen Lichtwellenleiter verwenden, könnten eingesetzt werden. Dabei bietet es sich an, wenn die Kommunikationsschnittstelle einen Zugriff auf Messwerte erlaubt, die in einem Speicher abgelegt sind. Dieser Speicher kann durch den vorgenannten nichtflüchtigen Speicher gebildet sein. Allerdings können auch Messwerte aus einem Arbeitsspeicher eines Prozessors, beispielsweise ein RAM (Random Access Memory) oder ein Cache, ausgelesen werden.

Die Kommunikationsschnittstelle kann dabei auf verschiedenste Arten aufgebaut sein. Drahtlose Übertragungsverfahren, beispielsweise funkbasierte oder optische Verfahren, lassen sich ebenso einsetzen wie kabelgebundene Verfahren. Die Übertragung kann analog oder digital, seriell oder parallel, paketiert oder in Datenströmen, über einen Bus oder Direktverbindungen erfolgen. Die jeweils eingesetzte Übertragungstechnik wird von dem jeweiligen Einsatzszenarium abhängen. Beispielhaft, jedoch nicht auf diese beschränkt, sei auf Bluetooth, Bluetooth **LE** (Low Energy), NFC (Near Field Communication), Ethernet, RS485, Modbus, Profibus, CAN-Bus oder USB (Universal Serial Bus) verwiesen. Vorzugsweise bietet die Kommunikationsschnittstelle dabei - direkt oder indirekt - einen Zugang zu einem Weitbereichsnetzwerk.

Unter Verwendung einer derartigen Kommunikationsschnittstelle kann ein erfindungsgemäßes System bestehend aus einem Elektromotor und eine Auswerteeinheit entstehen. Dabei würde die Kommunikationsschnittstelle dazu ausgebildet sein, Messwerte des Schallsensors und/oder aufbereitete Messwerte von der Sensorelektronik zu der Auswerteeinheit zu übertragen. Dabei ist die Auswerteeinheit dazu ausgebildet, die empfangenen Messwerte und/oder die empfangenen aufbereiteten Messwerte auszuwerten. Die Auswerteeinheit kann dabei auf verschiedentliche Arten gebildet sein. Die Auswerteeinheit kann eine dedizierte Einheit sein, die lediglich für diesen Anwendungszweck ausgestaltet ist. Vorzugsweise ist die Auswerteeinheit jedoch durch ein Laptop, ein Tablet, ein Smartphone oder ein sonstiges mobiles Endgerät gebildet, auf dem geeignete Software die Aufgaben der Auswerteeinheit übernimmt. Hierbei bietet es sich an, wenn die Kommunikationsschnittstelle drahtlos ausgebildet ist.

In einem Anwendungsszenarium könnte beispielsweise die Auswerteeinheit durch ein Smartphone mit entsprechender App gebildet sein, die mittels Bluetooth LE als Kommunikationsschnittstelle auf Messwerte des Schallsensors zugreifen kann. Hierbei könnte die App über die Kommunikationsschnittstelle die Sensorelektronik dazu veranlassen, Messwerte des Schallsensors zu erfassen und über die Kommunikationsschnittstelle in digitaler Form an die Auswerteeinheit zu übertragen. Mit der App könnte dann beispielsweise eine spektrale Analyse durchgeführt werden, die Ergebnisse mit Inhalten einer Datenbank abgeglichen und Informationen über den Zustand des/der Lager an den Benutzer ausgegeben werden. Auf diese Weise lässt sich eine Bewertung des Zustands des/der Lager im laufenden Betrieb des Elektromotors problemlos realisieren. Ferner kann auf das Bereitstellen eines umfassenden Speichers und umfassender Rechenressourcen bei der Sensorelektronik verzichtet werden.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: einen Schnitt durch ein Lagerrohr eines Außenläufermotors, bei dem ein nicht beanspruchter Schallraum durch das Lagerrohr gebildet ist,
- Fig. 2: einen Schnitt durch ein Lagerrohr eines anderen Außenläufermotors, bei dem ein nicht beanspruchter Schallraum ebenso durch das Lagerrohr gebildet ist und bei dem der Schallsensor Teil einer in das Lagerrohr eingesetzten Sensoranordnung ist,
- Fig. 3: einen Schnitt durch eine Statorbuchse eines Außenläufermotors, bei dem der Schallsensor auf einer Motorelektronik des Elektromotors angeordnet ist und
- Fig. 4: einen vergrößerten Ausschnitt des Schallraums des Ausführungsbeispiels gemäß Fig. 3.

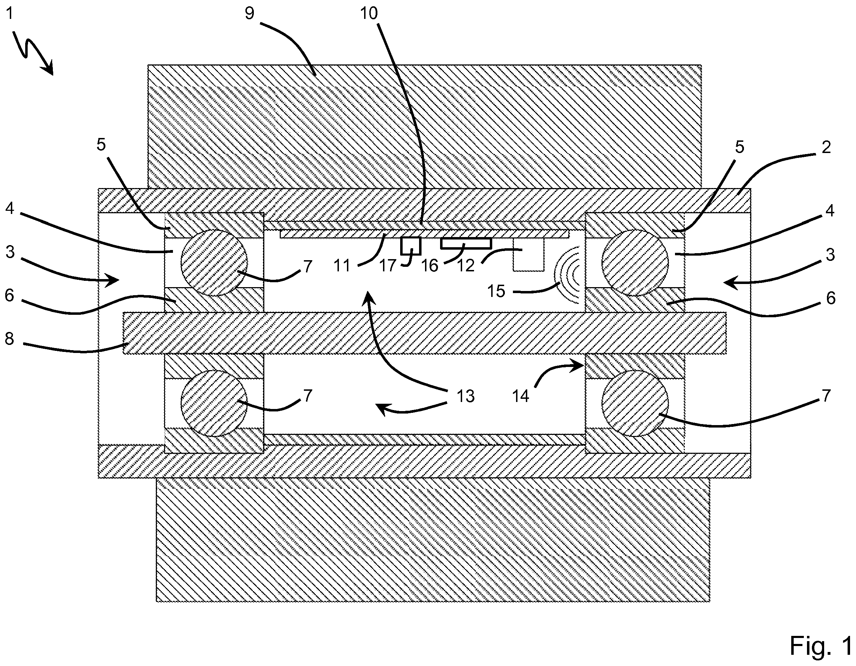

Fig. 1 zeigt einen Schnitt durch ein erstes Ausführungsbeispiel eines erfindungsgemäßen Elektromotors, der als Außenläufermotor ausgebildet ist und bei dem der nicht beanspruchte Schallraum in einem Lagerrohr gebildet ist. Der Übersichtlichkeit wegen ist lediglich eine schematische Darstellung gewählt und es sind lediglich essenzielle Elemente des Elektromotors dargestellt. So ist beispielsweise der Rotor des Elektromotors nicht eingezeichnet. Der Elektromotor 1 umfasst ein Lagerrohr 2, das in einer Statorbuchse des Elektromotors ausgebildet ist. An den beiden längsseitigen Enden sind jeweils Lageraufnahmebereiche 3 ausgebildet, in denen jeweils ein Lager 4 angeordnet ist. Jedes Lager 4 besteht aus einem Außenring 5 und einem Innenring 6, wobei zwischen Außenring 5 und Innenring 6 mehrere Wälzkörper 7 angeordnet sind. In den Innenringen 6 der Lager 4 ist eine Welle 8 des Elektromotors aufgenommen, die durch die Lager 4 drehbar relativ zu einem um das Lagerrohr herum angeordneten Statorwicklungspaket 9 ist. Zwischen den Lagern 5, 6 ist eine Trägerkonstruktion 10 angeordnet, die eine Leiterplatte 11 trägt. Auf der Leiterplatte 11 ist ein Schallsensor 12 angeordnet, der Schallwellen detektieren kann.

Innerhalb des Lagerrohrs 2 ist ein nicht beanspruchter Schallraum 13 gebildet, der von den Innenwandungen des Lagerrohrs 2, den Innenwandungen der Trägerkonstruktion 10 sowie den Stirnseiten 14 der Lager 4 begrenzt ist. Beim Betrieb der Lager 4, der in einer Drehbewegung der Welle 8 relativ zu dem Statorwicklungspaket und damit einer Drehbewegung der Innenringen 6 relativ zu den Außenringen 5 besteht, werden durch die Lager 4 Schallwellen 15 ausgesendet, was durch eine Serie von Kreisbögen in Fig. 1 skizziert ist. Dabei können nahezu alle Begrenzungsflächen des Schallraums 13 Schallflächen im Sinne der vorliegenden Erfindung sein. Primär werden die Stirnseiten 14 der Lager 4 als Schallflächen fungieren und Schallwellen aussenden. Allerdings ist die Welle 8 über die Innenringe 6 schwingungstechnisch mit den Lagern 4 gekoppelt, so dass beim Betrieb der Lager erzeugter Körperschall an die Welle 8 übertragen und damit ebenso an den nicht beanspruchten Schallraum abgegeben wird. Die Welle 8 dient dabei als schallleitender Körper, dessen Oberfläche Schall im Sinne einer Schallfläche an den nicht beanspruchten Schallraum abgibt. Entsprechendes gilt für die Innenwandungen des Lagerrohrs 2, die schwingungstechnisch mit den Außenringen 5 der Lager 4 gekoppelt sind und damit ebenso Körperschall des Lagers 4 übertragen können. Damit können auch die Innenwandungen des Lagerrohrs 2 Schallflächen im Sinne der vorliegenden Erfindung sein. Die Trägerkonstruktion 10 kann dabei - je nach deren Material und Ausgestaltung - dämpfend wirken oder den Schall von den Innenwandungen des Lagerrohrs 2 an den nicht beanspruchten Schallraum übertragen.

Beim Betrieb des Elektromotors werden die durch die Lager 4 erzeugten Schallwellen 15 von den Schallflächen an den nicht beanspruchten Schallraum abgegeben. Der Schallsensor 12 kann diese über Luft an den Schallsensor 12 gelangenden Schallwellen empfangen und daraus Messwerte generieren. Dabei ist der Schallsensor 12 nahe bei der Stirnseite 14 eines der beiden Lager 4 angeordnet. Durch den Schallsensor 12 gewonnene Messwerte können durch eine symbolisch dargestellte Sensorelektronik 16 aufbereitet und/oder ausgewertet werden. Eine Kommunikationsschnittstelle 17, die beispielsweise in Form von Bluetooth LE ausgebildet ist und Teil der Sensorelektronik ist, kann zur Übertragung von Messwerten an eine nicht dargestellte Auswerteeinheit außerhalb des Elektromotors genutzt werden.

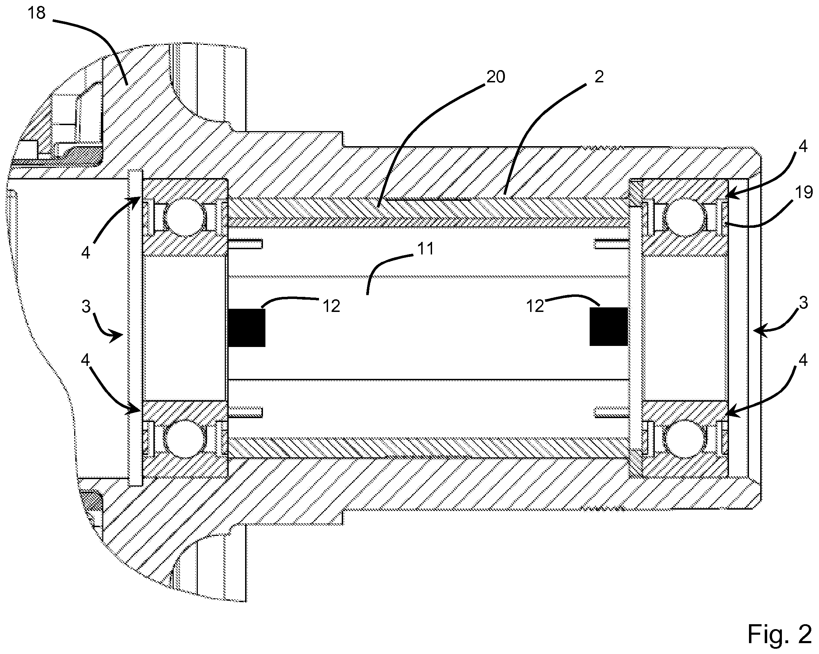

In Fig. 2 ist eine etwas detailliertere Darstellung einer Statorbuchse 18 eines zweiten Ausführungsbeispiels eines erfindungsgemäßen Elektromotors dargestellt. In der Statorbuchse 18 ist wiederum ein Lagerrohr 2 ausgebildet, an deren Enden jeweils Lageraufnahmebereiche 3 ausgebildet sind. In jedem der Lageraufnahmebereiche 3 sind Lager 4 angeordnet, die wiederum Außenringe, Innenringe und Wälzkörper aufweisen. Zusätzlich sind an den Lagern 4 Ringe 19 angeordnet, die den Raum zwischen Innenring und Außenring jeweils abschließen und einem Verlust von Lagerfett entgegenwirken. In dem Lagerrohr 2 ist eine Sensoranordnung angeordnet, wie sie in der DE 10 2018 211 833 A1 näher beschrieben ist. Auf einer Trägerhülse 20 der Sensoranordnung ist eine Leiterplatte 11 angeordnet, an deren längsseitigen Enden jeweils ein Schallsensor 12 angeordnet ist. Jeder Schallsensor 12 ist dabei dazu ausgebildet, Schall von dem jeweils nahegelegenen Lager zu detektieren und Messsignale daraus zu generieren.

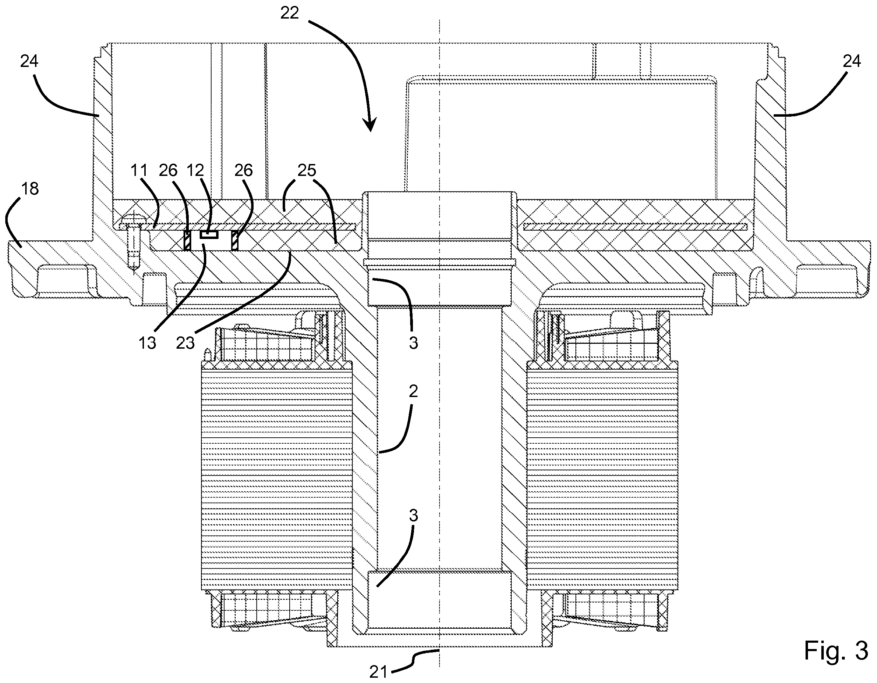

Fig. 3 zeigt einen Schnitt durch ein weiteres Ausführungsbeispiel eines erfindungsgemäßen Elektromotors, bei dem ein Schallraum zwischen einer Leiterplatte und einer Statorbuchse gebildet ist. Bei einer Motorachse 21 ist ein Lagerrohr 2 ausgebildet, an dessen längsseitigen Enden jeweils ein Lageraufnahmebereich 3 ausgebildet ist. In die Lageraufnahmebereiche 3 sind nicht dargestellte Lager aufgenommen, über die eine ebenso nicht dargestellte Welle des Elektromotors drehbar gelagert ist. Eine Statorbuchse 18 ist dabei durch ein Aluminium-Bauteil gebildet, an dessen einen Ende das Lagerrohr 2 und an dessen anderen Ende ein Elektronikgehäuse 22 zur Aufnahme einer Motorelektronik ausgebildet ist. Das Elektronikgehäuse 22 weist dabei einen Boden 23 und seitliche Wandungen 24 auf. Die Motorelektronik erzeugt jeweils Speisesignale und gibt diese an die Stator- und/oder Rotorwicklungen aus. Dabei ist von der Motorelektronik der Übersichtlichkeit wegen lediglich eine Leiterplatte 11 abgebildet, die in einer Vergussmasse 25 eingebettet ist. Auf der Leiterplatte 11 ist zudem auf der dem Boden 23 zugewandten Seite der Leiterplatte ein Schallsensor 12 angeordnet. Zwischen Leiterplatte 11 und Boden 23 ist ein Begrenzungselement 26 angeordnet, das in der Vergussmasse 25 einen als Schallraum 13 fungierenden Bereich freilässt.

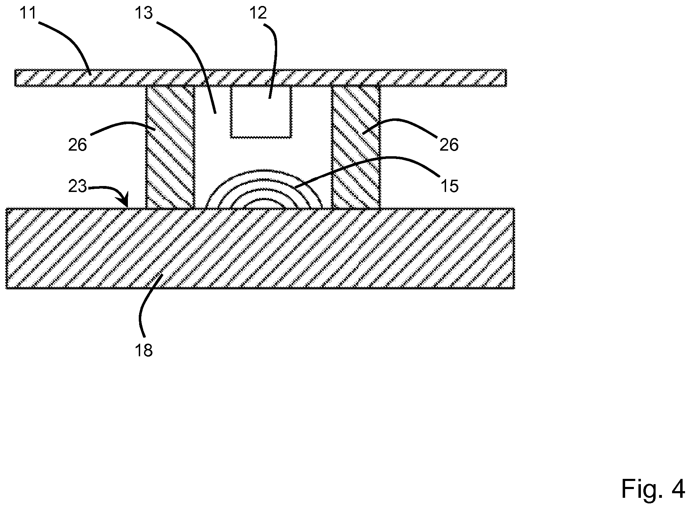

In Fig. 4 ist nochmals ein vergrößerter Ausschnitt dargestellt. Leiterplatte 11, Boden 23 und Begrenzungselement 26 begrenzen jeweils einen Schallraum 13, in dem ein Schallsensor 12 angeordnet ist. Der Boden 23 bzw. der zwischen dem Begrenzungselement 26 befindliche Bereich des Bodens fungiert als Schallfläche, die erfindungsgemäßen Schallwellen 15 in den Schallraum abgibt, was wiederum durch Kreisbögen angedeutet ist. Die Statorbuchse 18 überträgt dabei Schall von den Lagern zu der Oberfläche der Statorbuchse, in dem hier diskutierten Fall dem Boden 23. Dieser in den Schallraum abgegebene Schall kann durch den Schallsensor 12 detektiert werden.

Hinsichtlich weiterer vorteilhafter Ausgestaltungen des erfindungsgemäßen Elektromotors wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele lediglich zur Erörterung der beanspruchten Lehre dienen, diese jedoch nicht auf die Ausführungsbeispiele einschränken.

### Bezugszeichenliste

- 1: Elektromotor
- 2: Lagerrohr
- 3: Lageraufnahmebereiche
- 4: Lager
- 5: Außenring
- 6: Innenring
- 7: Wälzkörper
- 8: Welle
- 9: Statorwicklungspaket
- 10: Trägerkonstruktion
- 11: Leiterplatte
- 12: Schallsensor
- 13: Schallraum
- 14: Stirnseite
- 15: Schallwellen
- 16: Sensorelektronik
- 17: Kommunikationsschnittstelle
- 18: Statorbuchse
- 19: Ringe
- 20: Trägerhülse
- 21: Motorachse
- 22: Elektronikgehäuse
- 23: Boden
- 24: seitliche Wandungen
- 25: Vergussmasse
- 26: Begrenzungselement

## Patentansprüche

1. Elektromotor (1) mit mindestens einem Lager (4), durch das eine Welle (8) oder eine Achse des Elektromotors (1) drehbar gelagert ist, wobei während des Betriebs des Elektromotors (1) Schall entsteht, der mittels eines Schallsensors (12) detektierbar ist,
umfassend einen Schallraum (13), der in dem Elektromotor (1) ausgebildet und von mehreren Begrenzungsflächen begrenzt ist, wobei mindestens eine der Begrenzungsflächen eine Schallfläche umfasst, die Schallwellen (15) in den Schallraum (13) abgibt, wobei die Schallfläche durch eine Oberfläche des Lagers (4) oder durch eine Oberfläche eines schallleitenden Körpers gebildet ist, der Schall zu dessen Oberfläche leitet,
wobei der Schallsensor (12) in dem Schallraum (13) angeordnet ist und wobei der Schallsensor (12) dazu ausgebildet ist, über Luft von der Schallfläche an den Schallsensor (12) übertragenen Schall (15) zu detektieren,
**dadurch gekennzeichnet, dass**
der Schallraum (13) zwischen einer Leiterplatte (11) und einer Statorbuchse (18) des Elektromotors (1) gebildet ist, wobei als Statorbuchse (18) der Bereich des Elektromotors (1) bezeichnet ist, der ein Statorwicklungspaket (9) des Elektromotors (1) trägt.

2. Elektromotor (1) nach Anspruch 1, **dadurch gekennzeichnet, dass** der während des Betriebs des Elektromotors (1) entstehende Schall durch das mindestens eine Lager (4) ausgesendeten Schall umfasst.

3. Elektromotor (1) nach Anspruch 1 oder 2, **dadurch gekennzeichnet, dass** die Leiterplatte (11) eine Motorelektronik des Elektromotors (1) trägt.

4. Elektromotor (1) nach einem der Ansprüche 1 bis 3, **dadurch gekennzeichnet dass** zwischen Leiterplatte (11) und Statorbuchse (18) ein Begrenzungselement (26) angeordnet ist, das den Schallraum (13) in Richtungen parallel zur Leiterplatte (11) begrenzt.

5. Elektromotor (1) nach einem der Ansprüche 1 bis 4, **dadurch gekennzeichnet dass** der Schallsensor (12) auf der Leiterplatte (11), vorzugsweise auf der der Statorbuchse (18) zugewandten Seite, angeordnet ist.

6. Elektromotor (1) nach einem der Ansprüche 1 bis 5, **dadurch gekennzeichnet dass** der Schall leitende Körper durch eine Statorbuchse (18) des Elektromotors (1) gebildet ist und dass eine Schallfläche durch eine Oberfläche (23) der Statorbuchse (18) gebildet ist.

7. Elektromotor (1) nach einem der Ansprüche 1 bis 6, **dadurch gekennzeichnet, dass** der Schallsensor (12) bei der Schallfläche, vorzugsweise in einem Abstand von weniger als 5 cm, besonders bevorzugter Weise in einem Abstand von weniger als 1 cm, angeordnet ist.

8. Elektromotor (1) nach einem der Ansprüche 1 bis 7, **dadurch gekennzeichnet, dass** der Schallsensor (12) durch ein MEMS - Mikro-Elektro-Mechanisches System, insbesondere ein MEMS-Mikrofon gebildet ist.

9. Elektromotor (1) nach einem der Ansprüche 1 bis 8, **gekennzeichnet durch** eine Sensorelektronik (16), die zum Ansteuern des Schallsensors (12) ausgebildet ist.

10. Elektromotor (1) nach Anspruch 9,
**dadurch gekennzeichnet, dass** die Sensorelektronik (16) einen Prozessor zum Aufbereiten und/oder zum Auswerten von Messwerten des Schallsensors (12) aufweist.

11. Elektromotor (1) nach Anspruch 9 oder 10, **dadurch gekennzeichnet, dass** die Sensorelektronik (16) einen Speicher zum Speichern von Messwerten des Schallsensors (12) und/oder von aufbereiteten Messwerten und/oder von Ergebnissen einer Auswertung von Messwerten aufweist.

12. Elektromotor (1) nach einem der Ansprüche 9 bis 11
**dadurch gekennzeichnet, dass** die Sensorelektronik (16) eine Kommunikationsschnittstelle (17) aufweist, über die Messwerte und/oder aufbereitete Messwerte und/oder Ergebnisse einer Auswertung von Messwerten übertragbar sind.

13. Ventilator mit einem Elektromotor (1) nach einem der Ansprüche 1 bis 12, und einem Laufrad, wobei das Laufrad mit einem Rotor des Elektromotors (1) verbunden ist.

14. System bestehend aus einem Elektromotor (1) nach einem der Ansprüche 1 bis 13 und einer Auswerteeinheit, wobei die Auswerteeinheit eine Kommunikationsschnittstelle aufweist, über die Messwerte eines Schallsensors (12) und/oder aufbereitete Messwerte von einer Sensorelektronik (16) zu der Auswerteeinheit empfangbar sind, und wobei die Auswerteeinheit zur Auswertung der Messwerte und/oder der aufbereiteten Messwerte ausgebildet ist.

## Claims

1. An electric motor (1) comprising at least one bearing (4), by means of which a shaft (8) or an axle of the electric motor (1) is rotatably mounted, sound being generated during operation of the electric motor (1), which sound can be detected by means of a sound sensor (12), comprising a sound chamber (13), which is formed the electric motor (1) and is delimited by a plurality of delimiting surfaces, at least one of the delimiting surfaces comprising a sound face, which emits sound waves (15) into the sound chamber (13), the sound face being formed by a surface of the bearing (4) or by a surface of a sound-conducting body which conducts sound to its surface, the sound sensor (12) being arranged in the sound chamber (13), and the sound sensor (12) being configured to detect sound (15) transmitted through air from the sound face to the sound sensor (12), **characterized in that** the sound chamber (13) is formed between a printed circuit board (11) and a stator bushing (18) of the electric motor (1), the region of the electric motor (1) which supports a stator winding assembly (9) of the electric motor (1) being referred to as the stator bushing (18).

2. The electric motor (1) according to claim 1, **characterized in that** the sound generated during operation of the electric motor (1) includes sound emitted by the at least one bearing (4).

3. The electric motor (1) according to claim 1 or 2, **characterized in that** the printed circuit board (11) supports motor electronics of the electric motor (1).

4. The electric motor (1) according to any of claims 1 to 3, **characterized in that** a delimiting element (26) which delimits the sound chamber (13) in directions parallel to the printed circuit board (11) is arranged between the printed circuit board (11) and the stator bushing (18).

5. The electric motor (1) according to any of claims 1 to 4, **characterized in that** the sound sensor (12) is arranged on the printed circuit board (11), preferably on the side facing the stator bushing (18).

6. The electric motor (1) according to any of claims 1 to 5, **characterized in that** the sound-conducting body is formed by a stator bushing (18) of the electric motor (1), and **in that** a sound face is formed by a surface (23) of the stator bushing (18).

7. The electric motor (1) according to any of claims 1 to 6, **characterized in that** the sound sensor (12) is preferably arranged at a distance of less than 5 cm, particularly preferably at a distance of less than 1 cm, from the sound face.

8. The electric motor (1) according to any of claims 1 to 7, **characterized in that** the sound sensor (12) is formed by a micro-electro-mechanical (MEMS) system, in particular a MEMS microphone.

9. The electric motor (1) according to any of claims 1 to 8, **characterized by** sensor electronics (16) configured to actuate the sound sensor (12).

10. The electric motor (1) according to claim 9, **characterized in that** the sensor electronics (16) comprise a processor for processing and/or evaluating measured values from the sound sensor (12).

11. The electric motor (1) according to claim 9 or 10, **characterized in that** the sensor electronics (16) comprise a memory for storing measured values from the sound sensor (12) and/or processed measured values and/or results of an evaluation of measured values.

12. The electric motor (1) according to any of claims 9 to 11, **characterized in that** the sensor electronics (16) comprise a communication interface (17), via which measured values and/or processed measured values and/or results of an evaluation of measured values can be transmitted.

13. A fan comprising an electric motor (1) according to any of claims 1 to 12, and an impeller, wherein the impeller is connected to the rotor of the electric motor (1).

14. A system consisting of an electric motor (1) according to any of claims 1 to 13 and an evaluation unit, wherein the evaluation unit comprises a communication interface, via which measured values from the sound sensor (12) and/or processed measured values from sensor electronics (16) can be received by the evaluation unit, and wherein the evaluation unit is configured to evaluate the measured values and/or the processed measured values.

## Revendications

1. Moteur électrique (1)
comportant au moins un palier (4) dans lequel un arbre (8) ou
un axe du moteur électrique (1) est monté de manière rotative, dans lequel, pendant le fonctionnement du moteur électrique (1),
un son est généré, qui peut être détecté au moyen d'un capteur acoustique (12), comprenant une chambre acoustique (13) formée dans le moteur électrique (1) et délimitée par plusieurs surfaces de délimitation, au moins l'une des surfaces de délimitation comprenant une surface acoustique qui émet des ondes sonores (15) dans la chambre acoustique (13), la surface acoustique étant formée par une surface du palier (4) ou par une surface d'un corps conducteur de son qui guide le son vers sa surface,
le capteur acoustique (12) étant disposé dans la chambre acoustique (13) et le capteur acoustique (12) étant configuré pour détecter le son (15) transmis par voie aérienne depuis la surface acoustique jusqu'au capteur acoustique (12),
**caractérisé en ce que**
la chambre acoustique (13) est formée entre une carte de circuit imprimé (11) et une douille de stator (18) du moteur électrique (1), la douille de stator (18) désignant la partie du moteur électrique (1) qui porte un paquet de bobinages statoriques (9) du moteur électrique (1).

2. Moteur électrique (1)
selon la revendication 1, **caractérisé en ce que** le son généré pendant
le fonctionnement du moteur électrique (1)
comprend le bruit émis par ledit au moins un palier (4).

3. Moteur électrique (1)
selon la revendication 1 ou 2, **caractérisé en ce que** la
carte de circuit imprimé (11) supporte une électronique du moteur électrique (1).

4. Moteur électrique (1)
selon l'une des revendications 1 à 3, **caractérisé en ce**
**qu'**un élément de délimitation (26) est disposé entre la carte de circuit imprimé (11) et la douille de stator (18), cet élément délimitant la chambre acoustique (13) dans des directions parallèles à la carte de circuit imprimé (11).

5. Moteur électrique (1)
selon l'une des revendications 1 à 4, **caractérisé en ce**
**que** le capteur acoustique (12) est disposé sur la carte de circuit imprimé (11), de préférence sur le côté tourné vers la douille de stator (18).

6. Moteur électrique (1)
selon l'une des revendications 1 à 5, **caractérisé en ce**
**que** le corps conducteur acoustique est formé par une douille de stator (18) du moteur électrique (1) et en ce qu'une surface acoustique est formée par une surface (23) de la douille de stator (18).

7. Moteur électrique (1) selon l'une des revendications 1 à 6, **caractérisé en ce que** le capteur acoustique (12) est disposé à proximité de la surface acoustique, de préférence à une distance inférieure à 5 cm, et de manière particulièrement préférée à une distance inférieure à 1 cm.

8. Moteur électrique (1) selon l'une des revendications 1 à 7, **caractérisé en ce que** le capteur acoustique (12) est constitué d'un système microélectromécanique (MEMS), en particulier d'un microphone MEMS.

9. Moteur électrique (1) selon l'une des revendications 1 à 8,
**caractérisé par** une
électronique de capteur (16) conçue pour commander le capteur acoustique (12).

10. Moteur électrique (1) selon la revendication 9, **caractérisé en ce que** l'électronique de capteur (16) comporte un processeur destiné au traitement et/ou à l'évaluation des valeurs de mesure du capteur acoustique (12).

11. Moteur électrique (1) selon la revendication 9 ou 10,
**caractérisé en ce que**
l'électronique de capteur (16) comporte une mémoire destinée à stocker des valeurs de mesure du capteur acoustique (12) et/ou des valeurs de mesure traitées et/ou des résultats d'une analyse des valeurs de mesure.

12. Moteur électrique (1) selon l'une des revendications 9 à 11 **caractérisé en ce que** l'électronique de capteur (16) comporte une interface de communication (17), par l'intermédiaire de laquelle des valeurs mesurées et/ou des valeurs de mesure traitées et/ou des résultats d'une analyse des valeurs de mesure peuvent être transmises.

13. Ventilateur comprenant un moteur électrique (1) selon l'une des revendications 1 à 12, et
une roue, la roue étant reliée à un rotor du moteur électrique (1).

14. Système composé d'un moteur électrique (1)
selon l'une des revendications 1 à 13 et d'une unité d'évaluation, l'unité d'évaluation comportant une interface de communication par laquelle des valeurs de mesure d'un capteur acoustique (12) et/ou des valeurs de mesure traitées
par l'électronique de capteur (16) peuvent être reçues par l'unité d'évaluation,
et dans lequel l'unité d'évaluation est conçue pour analyser les valeurs de mesure et/ou les valeurs de mesure traitées.
